# EUROPÄISCHE PATENTSCHRIFT

(11) **EP 2 888 800 B1**
(45) Veröffentlichungstag und Bekanntmachung des Hinweises auf die Patenterteilung: **22.01.2020**
(21) Anmeldenummer: 13814596.6
(22) Anmeldetag: 21.08.2013
(51) Int. Cl.: H02J 9/06, H05B 33/08

(54) **NOTLICHTGERÄT**
EMERGENCY LIGHTING DEVICE
APPAREIL DE LUMIÈRE DE SECOURS

(30) Priorität: 21.08.2012 DE 102012214832
(43) Veröffentlichungstag der Anmeldung: 01.07.2015
(73) Patentinhaber: Tridonic UK Ltd., Basingstoke, Hampshire RG24 8LB (GB)
(72) Erfinder: JAGJITPATI, Shukla, Spennymoor County Durham DL16 6DR (GB); WILSON, Ian, East Herrington, Sunderland SR3 3RH (GB)
(74) Vertreter: Rupp, Christian
(86) Internationale Anmeldenummer: PCT/IB2013/002017
(87) Internationale Veröffentlichungsnummer: WO 2014/030062

(56) Entgegenhaltungen:
- JP-A- 2004 260 961
- US-A1- 2008 018 261
- US-A1- 2011 228 565
- US-A1- 2012 104 858
- YUNG-CHUN WU ET AL: "A Three-in-One Converter for Regular and Emergency Lighting Applications", IEEE TRANSACTIONS ON INDUSTRY APPLICATIONS, IEEE SERVICE CENTER, PISCATAWAY, NJ, US, Bd. 45, Nr. 1, 1. Januar 2009 (2009-01-01) , Seiten 108-115, XP011241649, ISSN: 0093-9994, DOI: 10.1109/TIA.2008.2009907

## Beschreibung

Die Erfindung betrifft ein Notlichtgerät zur Ansteuerung eines Leuchtmittels, insbesondere einer LED oder einer LED-Strecke. Hierbei sind alle Schaltungsteile des Notlichtgeräts parallel zu einem LED-Treiber (Off-Line LED-Treiber oder auch Standard LED Treiber bei anliegender AC Versorgung) vorgesehen, der das Leuchtmittel, worunter im Folgenden insbesondere eine LED oder eine LED-Strecke zu verstehen ist, im Normalbetrieb/Netzbetrieb versorgt.

Das bedeutet, dass das Notlichtgerät vorzugsweise nur für den Notlichtbetrieb, d.h. bei Ausfall der Netzspannung/Versorgungsspannung (AC-Spannung) eingesetzt wird, um die entsprechenden Strompfade zur Strom-/Spannungsversorgung des Leuchtmittels im Notlichtbetrieb mit einer Spannung/einem Strom für den Betrieb zu versorgen. Bei anliegender Netzspannung/Versorgungsspannung findet bei Vorhandensein eines parallelen Standard LED-Treibers eine Versorgung durch das Notlichtgerät jedoch nicht statt. Es ist aber auch möglich, dass das Notlichtgerät auch dazu ausgelegt ist, das Leuchtmittel auch bei anliegender Netzspannung/Versorgungsspannung zu versorgen.

Das Notlichtgerät weist einen Energiespeicher, beispielsweise eine Batterie oder einen Akkumulator auf, der ausgehend von der Netzspannung über eine Ladeschaltung mit Potentialtrennungselement, insbesondere einem Konverter und vorzugsweise einem Flyback-Konverter, geladen wird.

Das Potentialtrennungselement sorgt dabei für eine Potentialtrennung bzw. eine galvanische Trennung zwischen der Netzspannung und dem Energiespeicher.

Nachteilig an der aus dem Stand der Technik bekannten Anordnung ist jedoch, dass bei Anliegen des Netzpotentials an dem Leuchtmittel, d.h. bei Versorgung des Leuchtmittels über den LED-Treiber für den Netzbetrieb bzw. Normalbetrieb, Teile des Notlichtgeräts auf dem Netzpotential liegen, die jedoch von den übrigen Schaltungsteilen des Notlichtgeräts, insbesondere von dem Energiespeicher, nicht galvanisch getrennt sind.

Ein weiterer Nachteil des Standes der Technik ist, dass der dem Leuchtmittel zugeführte Strom oder die zugeführte Leistung geregelt oder eingestellt wird.

**Die** Erfindung stellt daher ein Notlichtgerät gemäß dem unabhängigen Anspruch 1 sowie ein Verfahren zum Betrieb des Notlichtgeräts gemäß dem unabhängigen Anspruch 6 bereit. Weiterbildungen der Erfindung sind Gegenstand der abhängigen Ansprüche.

US 2012/104858 A1 offenbart ein Notlichtgerät zur Ansteuerung eines Leuchtmittels gemäß dem Oberbegriff des Anspruchs 1.

In einem Aspekt weist ein Notlichtgerät zur Ansteuerung eines Leuchtmittels einen Energiespeicher, wie bspw. eine Batterie oder einen Akkumulator, und einen Ladeschaltung für den Energiespeicher mit Anschlüssen für eine AC-Spannung auf, wobei die Ladeschaltung ein erstes Potentialtrennungselement aufweist. Ausgehend von dem Energiespeicher wird ein getakteter zweiter Konverter mit zumindest einem Schalter, vorzugsweise ein Flyback-Konverter, versorgt, wobei der zweite Konverter vorzugsweise ausschließlich durch den Energiespeicher versorgbar ist. Es ist eine Steuerschaltung zur Ansteuerung des Schalters vorhanden, wobei die Steuerschaltung den Schalter derart ansteuert, dass der Entladestrom oder die Entladeleistung des Energiespeichers geregelt wird, vorzugsweise unabhängig von der Lichtabgabe des angeschlossenen Leuchtmittels. Der Entladeström wird dem Energiespeicher entnommen und versorgt den zweiten Konverter. Die dabei vom Energeispeicher entnommene Leistung ist die Entladeleistung. Die Steuerschaltung kann den Schalter derart ansteuern, dass ein Spitzenstrom des Entladestroms von Takt zu Takt limitiert wird.

In einem weiteren Aspekt wird ein Verfahren zur Ansteuerung eines Leuchtmittels mit einem Notlichtgerät beschrieben, wobei ein Energiespeicher, wie bspw. eine Batterie oder einen Akkumulator, über eine Ladeschaltung mit Anschlüssen für eine AC-Spannung bei anliegender AC-Spannung aufgeladen wird, wobei ausgehend von dem Energiespeicher ein getakteter zweiten Konverter mit zumindest einem Schalter, vorzugsweise einen Flyback-Konverter, versorgt wird, zumindest im Falle eines Ausfalls der AC-Spannung, wobei der Schalter derart ansteuert wird, dass der Entladestrom oder die Entladeleistung des Energiespeichers geregelt wird, vorzugsweise unabhängig von der Lichtabgabe des angeschlossenen Leuchtmittels. Es kann ein Spitzenstrom des Entladestroms von Takt zu Takt limitiert werden. Beispielsweise kann der Spitzenstrom durch den Schalter limitiert werden.

In einem weiteren Aspekt weist ein Notlichtgerät zur Ansteuerung eines Leuchtmittels einen Energiespeicher, wie bspw. eine Batterie oder einen Akkumulator, und eine Ladeschaltung für den Energiespeicher mit Anschlüssen für eine AC-Spannung (Wechselspannung, auch als Netzspannung bezeichnet) auf, wobei die Ladeschaltung ein erstes Potentialtrennungselement aufweist, einen ausgehend von dem Energiespeicher versorgten potentialgetrennten getakteten zweiten Konverter, auch als zweites Potentialtrennungselement bezeichnet, mit zumindest einem Schalter, vorzugsweise einen Flyback-Konverter, wobei der zweite Konverter vorzugsweise ausschließlich durch den Energiespeicher versorgbar ist, eine Steuerschaltung zur Ansteuerung des Schalters, und einen Versorgungspfad von der Sekundärseite des zweiten Konverters zu Anschlüssen für die Leuchtmittel.

Das zweite Potentialtrennungselement kann ein zweiter Konverter sein. Der zweite Konverter kann dabei insbesondere ein zweiter Flyback-Konverter sein.

Die Steuerschaltung kann über eine sekundärseitige Hilfswicklung an dem ersten Potentialtrennungselement und/oder eine primärseitige Hilfswicklung an dem zweiten Konverter mit Energie versorgt werden.

Die Hilfswicklung an dem zweiten Potentialtrennungselement kann so ausgelegt sein, dass die Steuerschaltung so lange mit Energie versorgt wird, bis der zweite Konverter von der Steuerschaltung getaktet betrieben wird.

Die Steuerschaltung kann über die Hilfswicklung an dem zweiten Konverter mit Energie versorgt werden, wenn die Steuerschaltung den zweiten Konverter getaktet betreibt.

Die Steuerschaltung kann über die Hilfswicklung an dem zweiten Konverter die sekundärseitige Spannung an dem zweiten Konverter erfassen.

Über die Hilfswicklung an dem zweiten Konverter kann der Zeitpunkt von der Steuerschaltung erfasst werden, zu dem die primärseitige Spule des zweiten Konverters entmagnetisiert ist.

Die Steuerschaltung kann bei Erfassen der Entmagnetisierung der primärseitigen Spule des zweiten Konverters das Wiedereinschalten des getaktetetn Schalters auslösen.

Die Steuerschaltung kann optional die durch den zweiten Konverter abgegebene Leistung in Abhängigkeit von dem angeschlossenen Leuchtmittel verändern.

In einem weiteren Aspekt wird eine Leuchte mit einem Notlichtgerät beschrieben. Die Leuchte kann bei Veränderung einer Betriebsspannung in einen Notlichtbetriebsmodus wechseln.

In noch einem weiteren Aspekt wird ein Verfahren zur Ansteuerung eines Leuchtmittels mit einem Notlichtgerät beschrieben, wobei ein potentialgetrennter getakteter zweiter Konverter, auch als zweites Potentialtrennungselement bezeichnet, mit einem Schalter, vorzugsweise ein Flyback-Konverter, ausgehend von einem Energiespeicher, bspw. einer Batterie oder einem Akkumulator, versorgt wird und wobei der zweite Konverter vorzugsweise ausschließlich durch den Energiespeicher versorgt wird.

Das zweite Potentialtrennungselement kann ein zweiter Konverter sein. Der zweite Konverter kann insbesondere ein zweiter Flyback-Konverter sein.

Die Erfindung und ihre Ausgestaltungen werden nunmehr auch mit Blick auf die Zeichnungen beschrieben. Dabei zeigen:
- Fig. 1: eine schematische Darstellung eines Notlichtgeräts nach einem ersten Aspekt der Erfindung.
- Fig. 2: eine detailliertere schematische Darstellung eines Notlichtgeräts nach dem ersten Aspekt der Erfindung.
- Fig. 3: eine schematische Darstellung eines Notlichtgeräts nach einem zweiten Aspekt der Erfindung.
- Fig. 4: eine detailliertere schematische Darstellung eines Notlichtgeräts nach dem zweiten Aspekt der Erfindung.
- Fig. 5: einen beispielhaften Schaltbild-Ausschnitt der Notlichtgeräteschaltung.
- Fig. 6: zeigt in einem Beispiel für einen Regelschema-Graphen eine Abhängigkeit des Batteriestroms von der Leuchtmittelspannung.

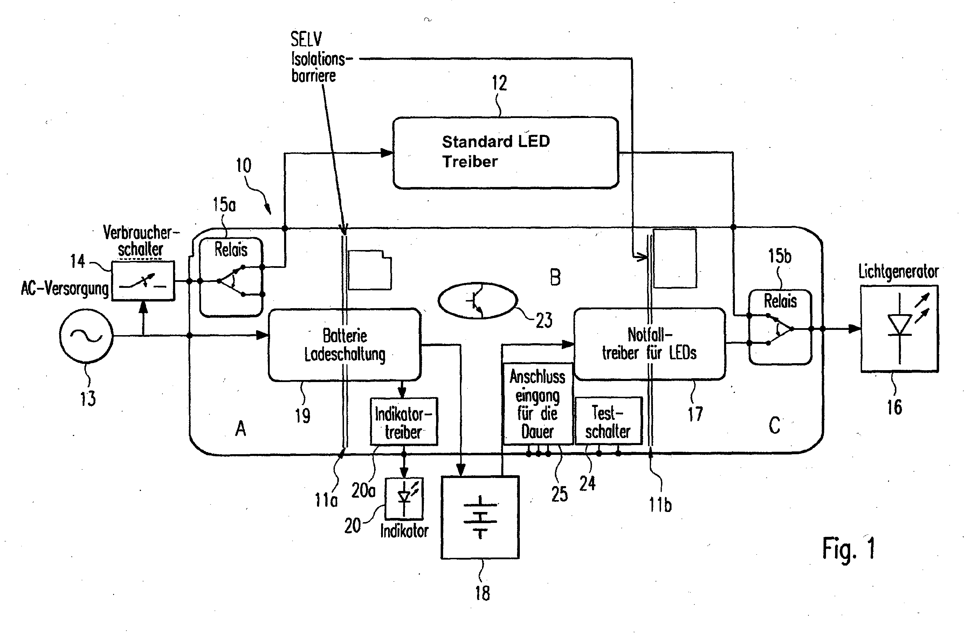

Fig. 1 zeigt schematisch ein Notlichtgerät 10 gemäß einem ersten Aspekt der Erfindung. Darin ist schematisch gezeigt, dass das Notlichtgerät 10 in drei Bereiche A, B, C unterteilt ist, die voneinander jeweils durch eine Sicherheitskleinspannungs-Isolationsbarriere 11a, 11b (Safety Extra Low Voltage (SELV) Isolation Barrier) voneinander getrennt sind. Ein LED-Treiber 12 für den Netzbetrieb ist in Fig. 1 als "off-line" LED-Treiber oder als Standard LED Treiber, der die LED bei anliegender AC Versorgung speisen kann, bezeichnet.

Aus Fig. 1 geht hervor, dass ein erster Strompfad ausgehend von der Netzversorgungsquelle 13 über einen Netzschalter 14, ein erstes Relais 15a, den LED-Treiber 12 für den Netzbetrieb und ein zweites Relais 15b zu dem Leuchtmittel 16 führt. Dieser Strompfad führt teilweise durch das Notlichtgerät 10 (veranschaulicht in den Bereichen A und C in denen das erste und das zweite Relais 15a, 15b angeordnet sind).

Das erste und das zweite Relais 15a, 15b sind dabei dazu eingerichtet, die Last, bzw. das Leuchtmittel 16 von dem Standard LED-Treiber 12 für den Netzbetrieb auf einen Notfall-LED-Treiber'17 umzuschalten, wenn die Netzspannung ausfällt, bzw. wenn sich die Netzspannung aus einem vorbestimmten Bereich bewegt, bzw. ein vorbestimmter Schwellwert über- oder unterschritten wird.

Gezeigt ist auch, dass ein Energiespeicher 18 über eine Ladeschaltung 19 im Normalbetrieb durch die Netzspannung geladen wird. Der Energiespeicher 18 versorgt dann, im Notlichtbetrieb, den Notfall-LED-Treiber 17, der wiederum über das zweite Relais 15b das Leuchtmittel 16 mit Strom versorgt.

Ein Indikator 20, der über einen Indikator-Treiber 20a angesteuert wird, kann dabei nach außen hin den Notlichtbetrieb einem Benutzer visuell und/oder akustisch signalisieren.

Gezeigt ist auch, dass der Energiespeicher 18 durch eine Sicherheitskleinspannungs-Isolationsbarriere 11b von dem Leuchtmittel 16 getrennt ist.
In einer alternativen Variante ist es möglich, dass auf einen Standard LED-Treiber 12 für den Netzbetrieb verzichtet wird und der Notfall-LED-Treiber 17 auch den Betrieb und die Versorgung des Leuchtmittels 16 bei anliegender Netzspannung übernimmt. In diesem Fall wäre das Notlichtgerät 10 als sogenanntes Kombinationsgerät ausgeführt, welches das Leuchtmittels 16 bei anliegender Netzspannung als auch bei Ausfall der Netzspannung betreiben kann. In diesem Fall kann auf die Relais 15a und 15b verzichtet werden.

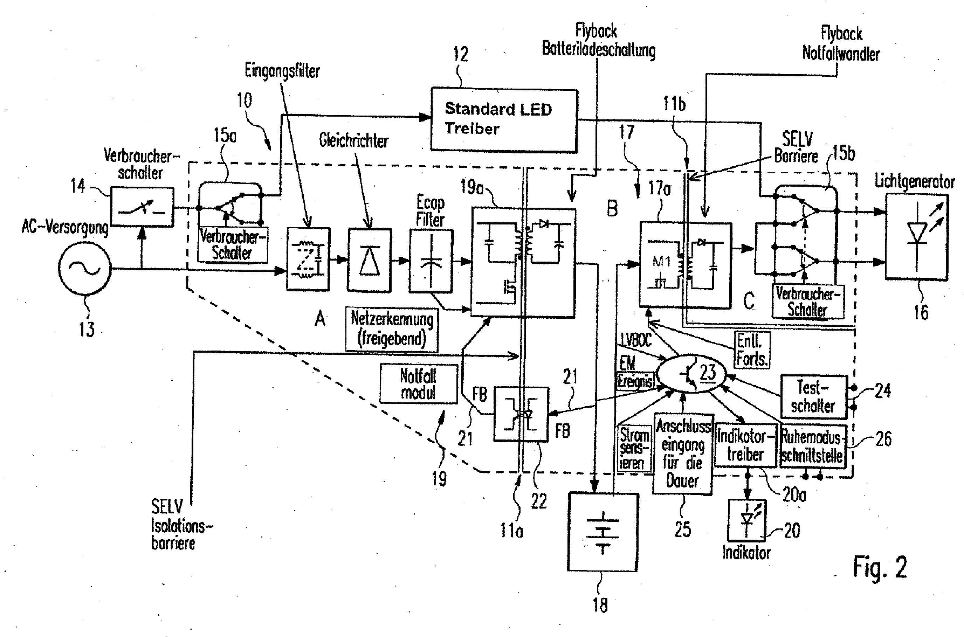

Eine detailliertere Ansicht des ersten Ausführungsbeispiels ist in Fig. 2 gezeigt. Dabei zeigt die Ladeschaltung 19 insbesondere ein erstes Potentialtrennungselement 19a, das ein Überbrücken der Isolationsbarriere 11a unter Beibehaltung der galvanischen Trennung ermöglicht. Bei dem ersten Potentialtrennungselement 19a handelt es sich dabei um einen ersten Konverter und insbesondere um einen ersten Flyback-Konverter, d.h. einen ersten Konverter mit einem getakteten Leistungsschalter, über den der Energiespeicher bei Anliegen der Netzspannung, d.h. im Normalbetrieb, geladen wird.

Dargestellt ist auch eine Feedback-Leitung 21 über einen Optokoppler 22, über die ein Feedback-Signal an die Primärseite der Ladungsschaltung übertragen werden kann, beispielsweise um den Betrieb des getakteten Leistungsschalters des ersten Konverters zu beeinflußen.

Ebenfalls ist das zweite Potentialtrennungselement 17a des Notfall-LED-Treibers 17 gezeigt, das dazu eingerichtet ist die Sicherheitskleinspannungs-Isolationsbarriere 11b unter Beibehaltung der galvanischen Trennung zu überbrücken, durch die der Energiespeicher sowie der sekundärseitige Teil der Ladeschaltung 19 von dem Leuchtmittel 16 (z.B. der LED, LED-Strecke, ...) getrennt ist. Im dargestellten Fall handelt es sich bei dem zweiten Potentialtrennungselement 17a ebenfalls um einen Konverter (im Folgenden als zweiter Konverter bezeichnet) und insbesondere um einen zweiten Flyback-Konverter, der ebenfalls getaktet betrieben wird.

In Fig. 2 (und auch in Fig. 1) ist zudem eine Steuerschaltung 23 gezeigt, die anhand der durch das erste Potentialtrennungselement 19a der Ladeschaltung 19 übertragene Spannung/des übertragenen Stroms direkt oder indirekt ermittelt, ob ein Notlichtbetrieb vorliegt. Die Steuerschaltung 23 kann daher indirekt oder direkt die Netzspannung erfassen (beispielsweise mittels einer Messung der Spannung auf der Sekundärseite des ersten Potentialtrennungselements der Ladeschaltung 19a) und somit auch einen Ausfall der Netzspannung, bzw. ein Abweichen der Netzspannung von einem vorbestimmten Wert, bzw. aus einem vorbestimmten Intervall, erkennen.

Die Steuerschaltung 23 kann auch die Taktung des zweiten Potentialtrennungselements 17a des Notfall-LED-Treibers 17 steuern, und somit die Leistung, den Strom und/oder die Spannung steuern, mit der das Leuchtmittel 16 im Notlichtbetrieb versorgt wird.

Die Steuerschaltung 23 kann den von dem Energiespeicher 18 abgegebenen Strom, bzw. die abgegebene Spannung erfassen und regeln, und optional den Betrieb des Indikators 20 steuern.

Vorzugsweise regelt oder steuert die Steuerschaltung 23 den von dem Energiespeicher 18 abgegebenen Strom, bzw. die abgegebene Spannung oder Leistung oder auch die Leistung, den Strom und/oder die Spannung steuern, mit der das Leuchtmittel 16 im Notlichtbetrieb versorgt wird, mittels der Ansteuerung eines aktiv gesteuerten Schalters in dem zweiten Konverter, beispielsweise durch Ansteuerung des Schalters M1.

Weitere Informationen von weiteren Modulen des Notlichtgeräts (von einem Testschalter 24 zum Initiieren eines Testmodus, von einem Zugang 25 zum Einstellen der Notlichtdauer und/oder von einer Ruhemodusschnittstelle 26 sind ebenfalls möglich) können von der Steuerschaltung 23 empfangen, verarbeitet und/oder an diese gesendet werden. Der Zugang 25 zum Einstellen der Notlichtdauer kann vorzugsweise zur Vorgabe der Dauer der Notlichtperiode genutzt werden. Beispielsweise kann das Notlichtgerät alternativ für eine Notlichtdauer von einer Stunde oder drei Stunden eingestellt werden. Diese Einstellung kann von den angeschlossenen Energiespeicher oder von lokalen Vorgaben abhängen. Mittels der Ruhemodusschnittstelle 26 kann dem Notlichtgerät ein Ruhemodus signalisiert werden. Beispielsweise kann vorgesehen sein, dass die komplette Beleuchtung in einen Ruhemodus versetzt wird und somit die Energieversorgung abgeschaltet wird. Da dies kein Notlichtfall ist und die Energiespeicher daher nicht entladen werden sollen, kann das Notlichtgerät über die Ruhemodusschnittstelle 26 in einen Ruhemodus versetzt werden.

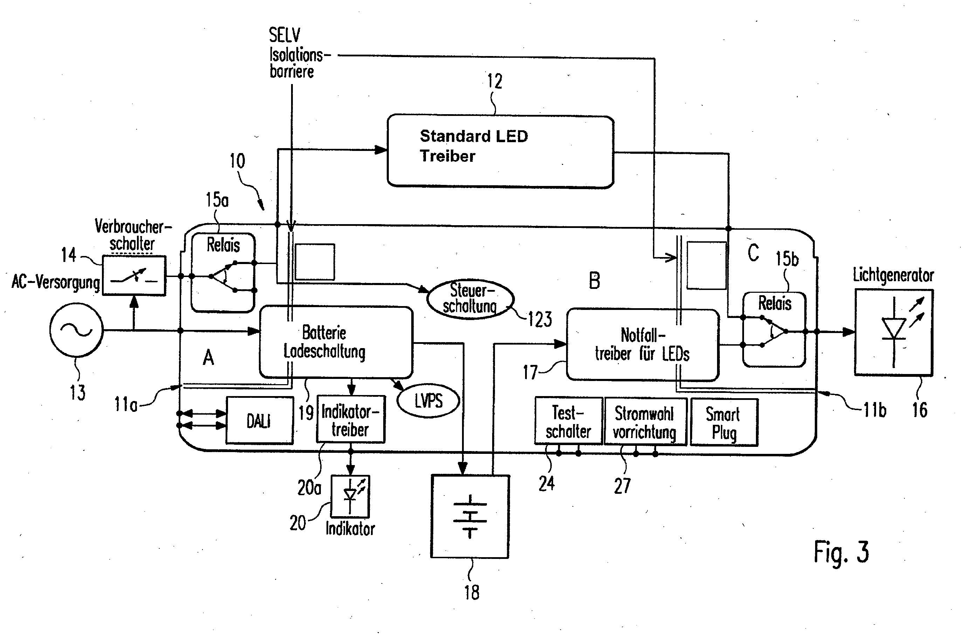

In Fig. 3 ist eine zweite Ausführungsform der Erfindung dargestellt. Die dargestellte Ausführungsform unterscheidet sich von der in Fig. 1 dargestellten Ausführungsform insbesondere dadurch, dass nunmehr die Steuerschaltung 123 durch einen Mikrocontroller (*µ*C), eine integrierte Schaltung IC und/oder eine ASIC realisiert ist. Der Aufbau der Ladeschaltung 19 sowie des Notfall-LED-Treibers 17 ist dabei im Wesentlichen identisch. Auch die mit gleichen Bezugszeichen versehenen Komponenten sind im Wesentlichen identisch in Aufbau und Funktion.

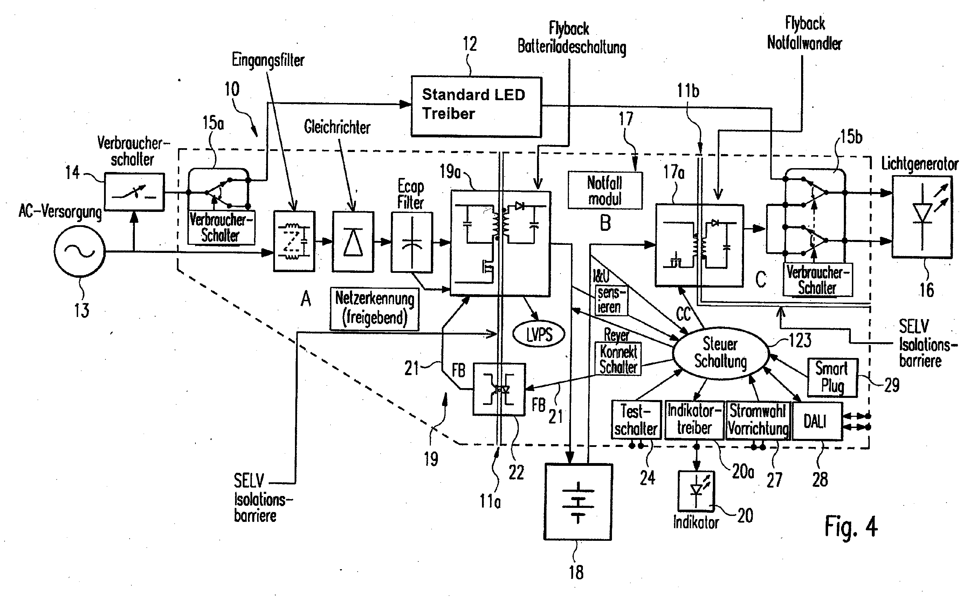

Dies gilt auch, für Fig. 4, die eine detailliertere schematische Darstellung der zweiten Ausführungsform aus Fig. 3 zeigt. Dabei kann im Bereich des Energiespeichers 18, d.h. auf der Sekundärseite des ersten Potentialtrennungselements der Ladeschaltung 19a und / oder auf der Primärseite des zweiten Potentialtrennungselements 17a des Notfall-LED-Treibers 17, eine Stromquelle mit niedriger Spannung (Low Voltage Power Source, LVPS) vorgesehen sein. Die dargestellte Steuerschaltung 123 (IC, ASIC, Mikrocontroller) kann dabei den Strom und/oder die Spannung, mit der der Energiespeicher 18 über das erste Potentialtrennungselement 19a der Ladeschaltung 19 versorgt wird, sowie die Spannung und/oder den Strom, die/der von dem Energiespeicher 18 dem zweiten Potentialtrennungselement 17a des Notfall-LED-Treibers (zweiten Konverters) 17 zugeführt wird, erfassen. Ebenfalls kann die Steuerschaltung 123 die Taktung des Schalters des zweiten Potentialtrennungselements 17a des Notfall-LED-Treibers (zweiten Konverter) 17 steuern und über einen Optokoppler 22 ein Feedback-Signal über einen Feedback-Pfad 21 an die Primärseite der Ladeschaltung 19 signalisieren (beispielsweise um den Betrieb des getakteten Leistungsschalters des ersten Konverters zu beeinflussen). Durch Verwendung des Optokopplers 22 wird die galvanische Trennung zwischen Energiespeicher und Netzspannung 13 erhalten.

Die Steuerschaltung 123 kann dabei wiederum zusätzliche Informationen auswerten, die beispielsweise von einem Testschalter 24, einer Stromwahlvorrichtung 27 sowie über eine DALI-Schnittstelle 28 zugeführt werden. Weiter kann die Steuerschaltung wiederum einen Indikator 20 ansteuern, der beispielsweise den Notlichtbetrieb nach außen signalisiert. Die Steuerschaltung kann zudem ein Signal auswerten, das über eine Schnittstelle 29, die in der Fig. 4 mit "Smart Plug" bezeichnet ist, zugeführt wird. Mittels der Schnittstelle 29 können dem Notlichtgerät erweiterte Betriebsinformationen oder Konfigurationen wie beispielsweise die Dauer und Höhe des Batterieladestroms vorgegeben werden. Schließlich kann die Steuerschaltung über die DALI-Schnittstelle mit anderen Geräten kommunizieren.

Ein Kernelement der Erfindung ist in der Trennung des Energiespeichers 18 von der an dem Leuchtmittel 16 anliegenden Netzspannung durch die isolierende Barriere 11b zu sehen. Die Erfindung erlaubt es auch, die Stromversorgung des Leuchtmittels 16 durch den Energiespeicher 18 über den Entladestrom des Energiespeichers 18 zu regeln. Dadurch ist es möglich, eine größere Anzahl verschiedener Spannungen an dem Leuchtmittel 16 bereitzustellen, als es ein Einsatz von anderen Konvertertypen, wie beispielsweise Boost-Konvertern (Aufwärtswandlern), erlauben würde. Zudem ist bei niedrigen Kosten ein Wirkungsgrad des Energiespeichers 18 von ca. 80% oder höher erreichbar (im quasiresonanten (QR) Betrieb).

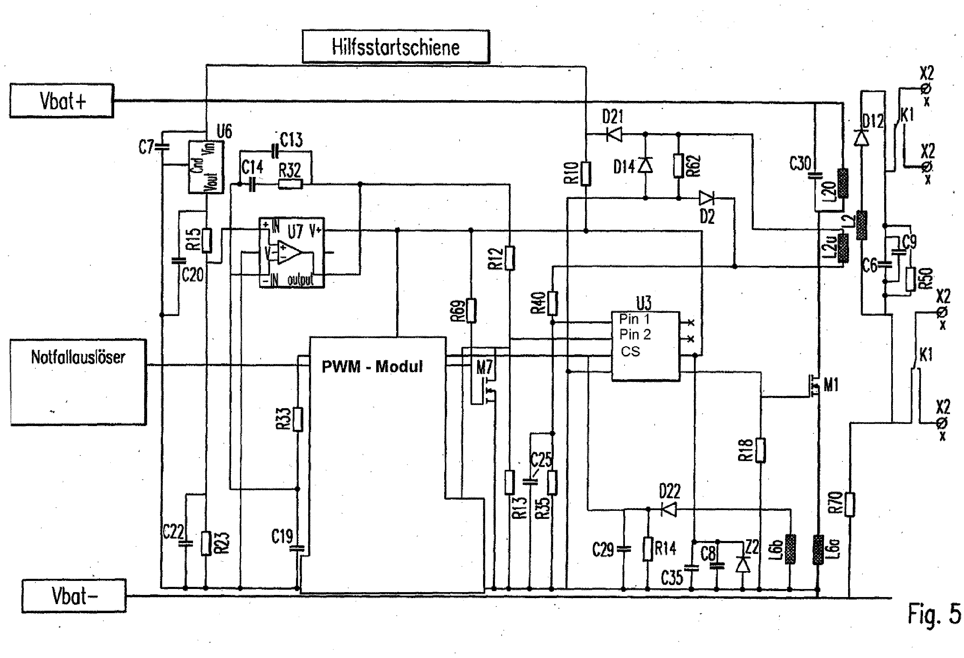

Eine beispielhafte detailliertere Ansicht relevanter Schaltungsteile des Notfall-LED-Treibers 17 ist in Fig. 5 gezeigt. Darin bilden eine Spule L20, ein Schalter M1 und eine Spule L6a den Hauptstromkreis auf der Primärseite des Potentialtrennungselements 17a des Notfall-LED-Treibers 17, der Strom direkt aus dem Energiespeicher 18 (und ggf. einem Entkopplungskondensator) gespeist wird. Fig. 5 zeigt also insbesondere den Schaltungsteil für die batteriegespeiste Ansteuerung des Potentialtrennungselements 17a bzw. des Flyback-Konverters des Notfall-LED-Treibers 17. Dabei weist das Potentialtrennungselement 17a einen Transformator mit den Spulen L20 und L2 auf. Der Schalter M1 wird über die Steuerschaltung U3 (IC, Microcontroller, ASIC, ...) angesteuert. Der Schalter M1 und der Transformator mit den Spulen L20 und L2 sowie die Diode D12 und die Glättungskondensatoren C6 und C9 bilden die Hauptbestandteile (d.h. die leistungsübertragenden Elemente) des Potentialtrennungselements 17a bzw. des Flyback-Konverters des Notfall-LED-Treibers 17.

Der Energiespeicher 18 ist in der Fig. 5 nicht direkt dargestellt, es sind aber die Anschlüsse Vbat+ und Vbatdargestellt, welche die beiden Anschlüsse des Energiespeichers 18 darstellen.

Die Erfassung des Schalterstroms des Schalters M1 erfolgt über einen Stromerfassungstransformator mit Spulen L6a und L6b. So kann bereits in der Erfassungsphase ein Verstärkerfaktor durch den Stromerfassungstransformator realisiert sein. Gleichzeitig sind die, Verluste im Vergleich zur Verwendung eines ohmschen Widerstands ' gering. Das/die Leuchtmittel ist/sind an die Anschlüsse X2 anzuschließen, die in Fig. 5 gezeigt sind.

Der an dem Stromerfassungstransformator erfasste Strom wird einerseits einem Eingangs-Pin CS (Current Sense) der Steuerschaltung U3 zugeführt. Über den Pin CS kann insbesondere eine Überstromerfassung des Schalterstroms erfolgen. Darüber hinaus wird der erfasste Strom über den ohmschen Widerstand R33 und den Filterkondensator C19 an dem invertierten Eingang 3 eines Fehlerverstärkers U7 zugeführt. Zu dem nicht invertierten Eingang 1 des Fehlerverstärkers U7 wird ein Sollwertpegel zugeführt, der aus einer integrierten Schaltung (IC) U6 und einem Widerstand R15 erzeugt wird. Der Ausgang des Fehlerverstärkers U7 wird im Feedback-Pin 2 der Steuerschaltung U3 zugeführt. Die Steuerschaltung U3 kann abhängig von diesem am Feedback-Pin 2 zugeführten Signal, welches vom Stromerfassungstransformator über den Fehlerverstärker U7 der Steuerschaltung U3 zugeführt werden, die Einschaltzeit und optional auch die Ausschaltzeit der hochfrequenten Taktung und somit Ansteuerung des Schalters M1 einstellen. Vorzugsweise erfolgt eine Spitzenstromregelung von Takt zu Takt an dem Pin CS der Steuerschaltung U3, wobei bei Überschreiten eines vorgegebenen Wertes für den Spitzenstrom durch den Schalter M1 der Schalter M1 geöffnet wird, und somit die Aufmagnetisierung der Spule L20 abgebrochen wird. In dem darauffolgenden Schritt erfolgt nunmehr eine Entladung des Transformators mit den Spulen L2 und L20. Das Ende dieser Entladephase kann beispielsweise durch die Hilfswicklung L2u überwacht und erkannt werden, und in weiterer Folge der Schalter M1 wieder eingeschaltet werden. Durch die Vorgabe eines entsprechenden Spitzenstromwertes für die im nächsten Zyklus erfolgende Abschaltung (Öffnung) des Schalters M1 kann somit ein entsprechendes Tastverhältnis des Schalters M1 und somit ein passendes Amplitudenverhältnis für den sich hochfrequent ändernden Entladestrom eingestellt werden und es kann somit der gewünschte mittlere Entladestrom des Energiespeichers 18 geregelt werden (es erfolgt eine Durchschnittsentladestromregelung) .

Es erfolgt somit mit Hilfe des Stromerfassungstransformators eine Erfassung des Entladestromes des Energiespeichers 18, wobei diese Erfassung zur Regelung des Entladestromes des Energiespeichers 18 dient. Alternativ zu dem Stromerfassungstransformator kann beispielsweise auch ein Strommesswiderstand (Strommess-Shunt) zur Erfassung des Stromes durch die Primärseite des Potentialtrennungselements 17a bzw. des Flyback-Konverters und zur Erfassung des Entladestromes des Energiespeichers 18 eingesetzt werden. Grundsätzlich erfolgt eine Erfassung des Entladestromes des Energiespeichers 18, wobei die Erfassung zur Regelung des Entladestromes oder der Entladeleistung des Energiespeichers 18 genutzt werden kann. Der Strom durch den Schalter M1 und durch die Spule L20 entspricht dem Entladestrom des Energiespeichers 18. Die in Fig. 5 gezeigte Anordnung weist weiter einen Schaltungsblock "PWM-Modul" bestehend aus nicht gezeigten Transistoren Q13, Q14, Q15 und Q16 auf. Dieser Schaltungsblock stellt ein PWM-Modul dar, der beispielsweise durch eine monostabile Kippstufe gebildet wird. Gemäß einer Ausführungsform wird mit konstantem Tastverhältnis der Betrieb des zweiten Flyback-Konverters impulsförmig gestaltet. Es kann auch vorgesehen sein, dass das PWM-Modul zusätzlich oder alternativ zu der Stromregelung in dem Fehlerverstärker, U7 verwendet wird. Es ist somit entweder ein Betrieb des zweiten Flyback-Konverters und somit des Notfall-LED-Treibers 17 in Pulspaketen möglich, wobei der Entladestrom über die Dauer der Pulspakete und den Abstand zwischen den Pulspaketen eingestellt wird, oder ein dauerhafter Betrieb ohne niederfrequente Pausen (und somit ohne Pulspakete), wobei der Entladestrom durch die Höhe des innerhalb eines hochfrequenten Taktes zugelassenen Stromes in der Primärseite des zweiten Potentialtrennungselements 17a, vorzugsweise des zweiten Flyback-Konverters, eingestellt werden kann. Es ist aber auch möglich, beide Einstellmöglichkeiten zu kombinieren, es kann also der Entladestrom sowohl durch Einstellung der Höhe des innerhalb eines hochfrequenten Taktes zugelassenen Stromes in der Primärseite des zweiten Potentialtrennungselements 17a als auch über die Dauer der Pulspakete eingestellt oder geregelt werden. Der Notfall-LED-Treiber 17 bietet somit zumindest zwei Steuerschemata, die entweder eine Amplitudensteuerung oder eine Kombination von Amplituden und PWM-Steuerung ermöglichen.

In Fig. 5 ist darüber hinaus insbesondere die Spannungsversorgung der Steuerschaltung U3 gezeigt. Eine sogenannte Hilfsstartschiene (auxiliary start rail) kann eine von der Netzspannung her führende Spannungsversorgung bereitstellen, die für eine kurze Zeitdauer nach einem Netzspannungsausfall noch eine Anlaufenergie zumindest für die Steuerschaltung U3 bereitstellt. Dabei ist die Hilfsstartschiene vom Netz gespeist, aber beispielsweise über das erste Potentialtrennungselement der Ladeschaltung 19 galvanisch von der Netzspannungsquelle 13 getrennt. Ist eine Niederspannungsstromquelle LVPS vorhanden, so ist die Hilfsstartschiene nicht zwingend vorzusehen.

Sobald die Steuerschaltung U3 das zweite Potentialtrennungselement 17a, z.B. einen zweiten Flyback-Konverter, des Notfall-LED-Treibers 17 mittels des Schalters M1 taktet, wird die Steuerschaltung U3 über eine Hilfswicklung L2u, die über die Diode D21 eine Spannung auf die Hilfsstartschiene nach dem Netzspannungsausfall speist, versorgt. Auch die übrigen durch die Hilfsstartschiene versorgten Schaltungsteile, z.B. die Einheit U6, werden dann ausgehend ebenfalls von der Hilfswicklung L2u versorgt.

Hierbei ist auf einen besonderen Vorteil der gezeigten Schaltungstopologie mit Flyback-Konverter hinzuweisen. Der zweite Flyback-Konverter, der durch den Energiespeicher 18, beispielsweise eine Batterie, gespeist wird, erlaubt es, höchst unterschiedliche LED-Lasten zu speisen. Somit können LED-Strecken mit z.B. unterschiedlicher Anzahl von LEDs, die somit auch eine unterschiedliche Versorgungsspannung auf der Sekundärseite des zweiten Flyback-Konverters in dem Notfall-LED-Treiber 17 benötigen, gespeist werden. Es kann also eingestellt werden, dass für eine entsprechend höhere Anzahl von LEDs eine höhere sekundärseitige Spannung erzeugt wird, wobei dementsprechend auch der LED-Strom absinken kann. Insbesondere bei Anwendung einer Regelung oder Stellung des Entladestromes des Energeispeichers 18 wird eine derartige Unabhängigkeit von der angeschlossenen Last, also beispielsweise der Anzahl oder dem Typ der LED, erreicht.

Die Hilfswicklung L2u dient weiterhin zur indirekten Erfassung der sekundärseitigen Spannung des von dem Energiespeicher 18 gespeisten zweiten Potentialtrennungselements 17a des Notfall-LED-Treibers 17. Bei geöffnetem Schalter M1 spiegelt die Spannung an der Hilfswicklung L2u die Ausgangsspannung des Potentialtrennungselements 17a, beispielsweise des zweiten Flyback-Konverters, wieder.

Darüber hinaus kann über die Hilfswicklung L2u der Zeitpunkt erfasst werden, zudem die Spule L20 entmagnetisiert, also entladen, ist. Dies kann über den Pin 1 (DMG, d.h. demagnetisiert) der Steuerschaltung U3 erfolgen. Daraufhin kann das Wiedereinschalten des Schalters M1 ausgelöst werden.

Über einen weiteren Schalter (z.B. einen MOSFET) M7 wird bei Anliegen eines Notfallmodus-Auslösesignals (Emergency Trigger Signal) der Feedbackeingang 2 der Steuerschaltung U3 nicht mehr auf das Nullpotential gezogen, sodass die Steuerschaltung U3 ihren Betrieb aufnehmen kann. Auch im PWM-Betrieb wird mittels eines Gate-Eingangs des weiteren Schalters M7 selektiv der Betrieb der Steuerschaltung U3 aktiviert bzw. deaktiviert. Im dargestellten Beispiel aus Fig. 5 kann das PWM-Signal wie gesagt über das PWM-Modul (mittels des Transistorennetzwerks Q13, Q14, Q15 und Q16) erzeugt werden. Alternativ kann das PWM-Signal auch als Ausgangssignal von einem Mikrocontroller oder ähnlichem als alternative Form des PWM-Moduls erzeugt werden.

Bei dem Schalter M1 handelt es sich insbesondere um einem Hochstrom-Niederspannungs-FET (High Current Low Voltage FET). Der Schalter M1 wird verwendet, da in der Schaltung Spitzenstromwerte von bis zu 10 Ampere auftreten können. Weiter wird ein Stromerfassungstransformator (auch Stromtastübertrager genannt) verwendet, um die Verluste in dem Stromtastwiderstand R33 zu reduzieren und ein passendes Amplitudenverhältnis zu der Spitzenstromregelung von Takt zu Takt an dem Pin CS der Steuerschaltung U3 einzustellen.

Die Versorgung der Schaltungseinheiten kann über die Hilfsstartschiene (Auxiliary Start Rail) bereitgestellt werden, falls ihre Spannungsbedürfnisse über das Niveau des Energiespeichers 18 hinausgehen. Dadurch ist keine Boost-Schaltung als LVPS nötig, da die Steuerschaltung U3 mittels der Hilfsversorgung, die auch nach Ausfall der Netzspannung für kurze Zeit zur Verfügung steht, startet. Wird eine Niederspannungsstromquelle LVPS als Spannungsversorgung bereitgestellt, so ist die Verwendung einer Hilfsstartschiene nicht unbedingt nötig.

Der Fehlerverstärker U7 in Verbindung mit der Steuerschaltung U3 erlaubt es dem System den Entladestrom des Energiespeichers 18 unabhängig von dem Leuchtmittel bzw. der LED-Last einzustellen. Vorzugsweise wird nicht der Strom oder die Leistung des Leuchtmittels bzw. der LED-Last geregelt oder eingestellt, sondern es wird der Entladestrom oder die Entladeleistung, welche von dem Energiespeicher 18 entnommen wird, auf einen vorgegebenen Wert geregelt oder auch eingestellt. Dies erlaubt den Betrieb einer großen Anzahl verschiedener LED-Leuchtmittel an dem Notlichtgerät, jeweils mit einer optimierten Batterieentladerate und damit einer optimierten Notlichtabgabe.

Das PWM-Modul ist ein PWM-Generator, der einen impulsförmigen Betrieb (niederfrequente Pulspakete, die voneinander beabstandet sind) des Notlicht-LED-Konverters 17 und somit des LED-Leuchtmittels erlaubt. Ein impulsförmiger Betrieb kann in manchen Fällen bei Dimmniveaus von ≤ 30% gefordert oder vorteilhaft sein.

Die Hilfswicklung L2u formt mit der Diode D21 insbesondere einen Vorwärtswandler, der die Niederspannungsstromquelle LVPS bilden kann. Deren Spannung kann proportional zu der Spannung des Energiespeichers 18 sein, wodurch ebenfalls eine große Vielzahl von Leuchtmittel-Betriebsspannungen ermöglicht wird. Eine typische Betriebsspannung liegt beispielsweise bei ca. 50 Volt. Diese Versorgung wird benötigt, um die Steuerschaltung U3 und die anderen Schaltungsteile zu versorgen, wenn die Netzspannung ausfällt. Bei sich ändernden Spannungsverhältnissen kann die Hilfswicklung L2u in einem Flyback-Modus betrieben werden, insbesondere in Verbindung mit der Diode D2. Auf diese Weise kann die Hilfswicklung L2u sowohl in einem Vorwärtswandler als auch in einem Flyback-Modus betrieben werden und dadurch über einen weiten Spannungsbereich des Energiespeichers 18 eine Niederstromquelle LVPS bilden.

Die Hilfswicklung L2u wird zusammen mit der Diode D2, dem Widerstand R62 und der Diode D14 verwendet, um sowohl den quasi-resonanten Betrieb (QR-Betrieb) zur Reduzierung der Schaltverluste in dem Schalter M1, als auch das Erkennen von und das Abschalten bei Fehlerbedingungen, wie beispielsweise einem Kurzschluss und/oder einem offenen Stromkreis, zu ermöglichen.

Der Schalter M7 wird dazu verwendet, den zweiten Konverter des Notfall-LED-Treibers sowohl beim Eintritt, wie auch beim Austritt aus dem Notlichtbetrieb als auch bei gepulstem Betrieb der LED-Strecke und des Notfall-LED-Treibers zu aktivieren bzw. zu deaktivieren.

Ein niedriger Batterieruhestrom kann in einem Ruhezustand gehalten und ermöglicht werden, da die Versorgung mit niedriger Spannung von der Spule L20 des zweiten Potentialtrennungselements 17a, bzw. der Drosselspule des zweiten Flyback-Konverters des Notfall-LED-Treibers 17, abgeleitet wird und daher aufgrund des Vorhandensein des Transformators keine direkte Verbindung von dem Energiespeicher 18 zu dem Leuchtmittel 16 besteht und somit ohne Taktung des zweiten Konverters bzw. des Notlicht-LED-Konverters 17 keine Versorgung des Leuchtmittels 16 erfolgen kann und somit der Energiespeicher 18 nicht entfernt werden muß. Auf diese Weise ist trotz des Einsatzes eines einstufigen Wandlers als Entladeschaltung bzw. Notlicht-LED-Konverter 17 sichergestellt, dass in einem Ruhezustand der Energiespeicher 18 nicht unnötig entladen wird.

Ein Ziel der Erfindung ist es dabei, zwei Arten von SELV-Lasten (z.B. <60 Volt Gleichspannung (DC)) und zwei Arten von Nicht-SELV-Lasten (z.B. >60 Volt DC) zu erzeugen. Die zwei Versionen werden beispielsweise jeweils drei und vier Energiespeicherzellen, bzw. vier und fünf Energiespeicherzellen für eine optimierte Lichtausgabe bereitstellen. Die Fehlererkennung wird z.B. bei 60V bzw. 120V festgelegt. Das Steuersystem für den Strom des Energiespeichers 18 kann dann die Spannung des Energiespeichers erhöhen, bis der Entladestrom optimiert ist, unabhängig von der angeschlossenen Last. Es wird dabei wie bereits erläutert der Entladestrom geregelt, wobei sich die entsprechende Spannung am Energiespeicher einstellt.

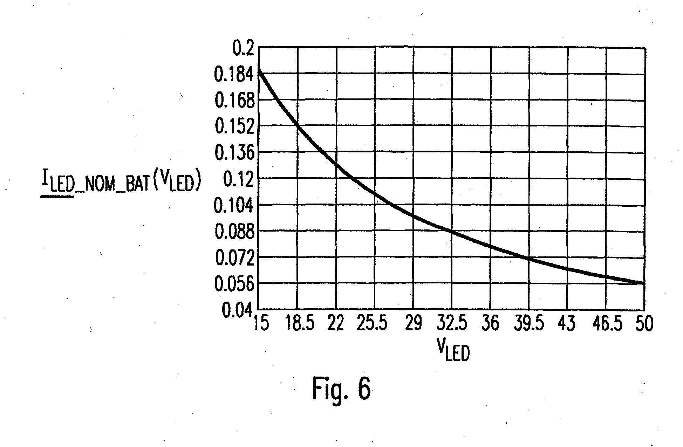

Ein Verbraucher (Nutzer) kann eine höhere Lichtausgabe erreichen, indem er beispielsweise mehr Energiespeicherzellen anschließt. Ein Beispiel für dieses Regelschema kann dem Graph in Fig. 6 entnommen werden.

Dabei zeigt Fig. 6 eine 3-Energiespeicherzellen-SELV-Einheit, bei einer Nennspannung einer Batterie von 3,6 Volt und bei 1 Ampere Batterieentladestrom. Somit kann das gezeigte Notlichtgerät jede Last bis zu einem vorbestimmten Spannungslimit betreiben (z.B. 15 Volt < V_{LED} < 60 Volt DC und/oder z.B. 60 Volt DC ≤ V_{LED} < 120 Volt DC). Das Notlichtgerät kann den Entladestrom des Energiespeichers 18 steuern oder auch regeln und damit die Lichtabgabe unabhängig von dem angeschlossenen Leuchtmittel optimieren.

Die Hilfswicklung L2u des zweiten Konverters erlaubt es in einem Vorwärts- und Flyback-Modus betrieben zu werden und so eine Versorgung mit niedriger Spannung bereitzustellen und/oder einen quasi resonanten Betrieb und/oder einen Fehlerzustand zu erkennen.

Weiter wird ein Stromerkennungssystem bereitgestellt, das sowohl die Spitzenströme von Takt zu Takt limitiert, um beispielsweise eine Durchschnittsentladestromregelung bereitzustellen. Das Notlichtgerät kann den Entladestrom des Energiespeichers mittels einer Spitzenstromregelung von Takt zu Takt regeln, vorzugsweise mit Hilfe einer Stromerfassung mittels Der Notfall-LED-Treiber bietet weiter zwei Steuerschemata, die entweder eine Amplitudensteuerung oder eine Kombination von Amplituden und PWM-Steuerung ermöglichen.

Insbesondere mit einer Regelung des Entladestromes des Energiespeichers kann der zweite Konverter alternativ auch durch eine andere Form eines getakteten Wandlers gebildet werden, beispielsweise durch einen CUK-Konverter, einen SEPIC-Konverter oder einen Inverter.

## Patentansprüche

1. Notlichtgerät (10) zur Ansteuerung eines Leuchtmittels (16), aufweisend:
- einen Energiespeicher (18),
- eine Ladeschaltung (19) für den Energiespeicher (18) mit Anschlüssen für eine Netzspannung (13), wobei die Ladeschaltung (19) ein erstes Potentialtrennungselement (19a) aufweist,
- einen ausgehend von dem Energiespeicher (18) versorgten Potentialgetrennten getakteten Konverter (17) mit zumindest einem Schalter (M1),
- eine Steuerschaltung (23, 123), die dazu eingerichtet ist, die Netzspannung (13) direkt oder indirekt zu erfassen, wobei die Steuerschaltung (23, 123) ferner eingerichtet ist, den Konverter (17) durch Ansteuerung des Schalters (M1) getaktet zu betreiben, wenn einen Ausfall der Netzspannung (13) durch die Steuerschaltung (23 ,123) erkannt wird, und
- einen Versorgungspfad von einer Sekundärseite des Konverters (17) zu Anschlüssen (X2) für das Leuchtmittel (16),
**dadurch gekennzeichnet, dass**
- die Steuerschaltung (23, 123) über eine sekundärseitige Hilfswicklung an dem ersten Potentialtrennungselement (19a) oder über eine primärseitige Hilfswicklung (L2u) an dem Konverter (17) mit Energie versorgbar ist,
wobei die sekundärseitige Hilfswicklung an dem ersten Potentialtrennungselement (19a) so ausgelegt ist, dass die Steuerschaltung (23, 123) so lange mit Energie versorgbar ist, bis der Konverter (17) von der Steuerschaltung (23, 123) getaktet betrieben wird,
wobei die primärseitige Hilfswicklung (L2u) an dem Konverter (17) so ausgelegt ist, dass die Steuerschaltung (23, 123) mit Energie versorgbar ist, wenn der Konverter (17) von der Steuerschaltung (23, 123) getaktet betrieben wird.

2. Notlichtgerät nach Anspruch 1,
wobei die Steuerschaltung (23, 123) dazu eingerichtet ist, über die primärseitige Hilfswicklung (L2u) an dem Konverter (17) eine sekundärseitige Spannung an dem Konverter (17) zu erfassen.

3. Notlichtgerät nach einem der Ansprüche 1 oder 2,
wobei über die primärseitige Hilfswicklung (L2u) an dem Konverter (17) der Zeitpunkt durch die Steuerschaltung (23, 123) erfassbar ist, zu dem eine primärseitige Spule (L20) des Konverters (17) entmagnetisiert ist.

4. Notlichtgerät nach Anspruch 3,
wobei die Steuerschaltung (23, 123) dazu eingerichtet ist, bei erfassen der Entmagnetisierung der primärseitigen Spule (L20) des Konverters (17) ein Wiedereinschalten des getakteten Schalters (M1) auszulösen.

5. Leuchte mit einem Notlichtgerät nach einem der Ansprüche 1 bis 4,
wobei die Leuchte dazu eingerichtet ist, bei Veränderung der Netzspannung (13) in einen Notlichtbetriebsmodus zu wechseln.

6. Verfahren zur Ansteuerung eines Leuchtmittels mit einem Notlichtgerät nach einem der Ansprüche 1 bis 4, aufweisend die folgenden Schritte:
- Versorgen, mittels des Energiespeichers (18), des potentialgetrennten getakteten Konverter (17),
- direkt oder indirekt Erfassen, mittels der Steuereinheit (23, 123), der Netzspannung (13),
- wenn ein Ausfall der Netzspannung (13), mittels der Steuereinheit (23, 123), erkannt wird, getaktetes Betreiben des Konverters (17) durch Ansteuern, mittels der Steuerschaltung (23, 123), des Schalters (M1) des Konverters (17),
**gekennzeichnet durch**
- Versorgen der Steuerschaltung (23, 123) mit Energie über die sekundärseitige Hilfswicklung an dem ersten Potentialtrennungselement (19a) oder über die primärseitige Hilfswicklung (L2u) an dem Konverter (17),
- Versorgen, durch die sekundärseitige Hilfswicklung an dem ersten Potentialtrennungselement (19a), der Steuerschaltung (23, 123) so lange mit Energie, bis der Konverter (17) von der Steuerschaltung (23, 123) getaktet betrieben wird,
- Versorgen, durch die primärseitige Hilfswicklung (L2u) an dem Konverter (17), der Steuerschaltung (23, 123) mit Energie, wenn der Konverter (17) von der Steuerschaltung (23, 123) getaktet betrieben wird.

## Claims

1. An emergency lighting device (10) for controlling a lighting means (16), having:
- an energy store (18)
- a charging circuit (19) for the energy store (18) with connections for a mains voltage (13), wherein the charging circuit (19) has a first potential separation element (19a),
- a potentially separated clocked converter (17) supplied from the energy store (18), having at least one switch (M1),
- a control circuit (23, 123) which is configured to detect the mains voltage (13) directly or indirectly, wherein the control circuit (23, 123) is also configured to operate the converter (17) in a clocked manner by controlling the switch (M1), if a failure of the mains voltage (13) is detected by the control circuit (23, 123), and
- a supply path from a secondary side of the converter (17) to connections (X2) for the lighting means (16),
**characterized in that**
- the control circuit (23, 123) can be supplied with energy via a secondary- side auxiliary winding on the first potential separation element (19a) or via a primary-side auxiliary winding (L2u) on the converter (17),
wherein the secondary-side auxiliary winding is adapted to the first potential separation element (19a) so that the control circuit (23, 123) can be supplied with energy until the converter (17) is operated in a clocked manner by the control circuit (23, 123),
wherein the primary-side auxiliary winding (L2u) is adapted to the converter (17) so that the control circuit (23, 123) can be supplied with energy, if the converter is operated in a clocked manner by the control circuit (23, 123).

2. The emergency light device according to Claim 1,
wherein the control circuit (23, 123) is configured to detect a secondary-side voltage on the converter (17) by means of the primary-side auxiliary winding (L2u) on the converter (17).

3. The emergency light device according to any one of Claims 1 or 2,
wherein the point in time can be detected by the control circuit (23, 123) by means of the primary-side auxiliary winding (L2u) on the converter (17), at which a primary-side coil (L20) of the converter (17) is demagnetized.

4. The emergency light device according to Claim 3,
wherein the control circuit (23, 123) is configured to trigger a switching on again of the clocked switch (M1) upon detection of the demagnetization of the primary-side coil (L20) of the converter (17).

5. A lamp with an emergency light device according to any one of Claims 1 to 4,
wherein the lamp is configured to switch to an emergency light operating mode when the mains voltage (13) changes.

6. A method for controlling a lighting means with an emergency light device according to any one of Claims 1 to 4, having the following steps:
- Supply, by means of the energy store (18), of the potentially separated clocked converter (17),
- direct or indirect detection, by means of the control unit (23, 123), of the mains voltage (13),
- if a failure of the mains voltage (13) is detected by means of the control unit (23, 123), clocked operation of the converter (17) by control of the switch (M1) of the converter (17) by means of the control circuit (23, 123),
**characterized by**
- supply of the control circuit (23, 123) with energy via the secondary-side auxiliary winding on the first potential separation element (19a) or via the primary-side auxiliary winding (L2u) on the converter (17),
- supply, by the secondary-side auxiliary winding on the first potential separation element (19a), of the control circuit (23, 123) with energy until the converter (17) is operated in a clocked manner by the control circuit (23, 123),
- supply, by the primary-side auxiliary winding (L2u) on the converter (17), of the control circuit (23, 123) with energy, if the converter (17) is operated in a clocked manner by the control circuit (23, 123).

## Revendications

1. Appareil d'éclairage de secours (10) pour le contrôle d'un moyen d'éclairage (16), comprenant :
- un accumulateur d'énergie (18),
- un circuit de charge (19) pour l'accumulateur d'énergie (18) avec des raccordements pour une tension de réseau (13), le circuit de charge (19) comprenant un premier élément de séparation de potentiel (19a),
- un convertisseur (17) alimenté à partir de l'accumulateur d'énergie (18), cadencé et à potentiel séparé avec au moins un commutateur (M1),
- un circuit de commande (23, 123) qui est conçu pour mesurer directement ou indirectement la tension de réseau (13), le circuit de commande (23, 123) étant en outre conçu pour faire fonctionner de manière cadencée le convertisseur (17) par le contrôle du commutateur (M1) lorsqu'une chute de la tension du réseau (13) est détectée par le circuit de commande (23, 123) et
- un chemin d'alimentation d'un côté secondaire du convertisseur (17) vers des raccordements (X2) pour le moyen d'éclairage (16),
**caractérisé en ce que**
- le circuit de commande (23, 123) peut être alimenté en énergie par l'intermédiaire d'un enroulement auxiliaire côté secondaire sur le premier élément de séparation de potentiel (19a) ou par l'intermédiaire d'un enroulement auxiliaire côté primaire (L2u) sur le convertisseur (17),
l'enroulement auxiliaire côté secondaire sur premier élément de séparation de potentiel (19a) étant conçu de façon à ce que le circuit de commande (23, 123) puisse être alimenté en énergie jusqu'à ce que le convertisseur (17) soit contrôlé de manière cadencée par le circuit de commande (23, 123),
l'enroulement auxiliaire côté primaire (L2u) sur le convertisseur (17) étant conçu de façon à ce que le circuit de commande (23, 123) puisse être alimenté en énergie lorsque le convertisseur (17) est contrôlé de manière cadencée par le circuit de commande (23, 123).

2. Appareil d'éclairage de secours selon la revendication 1,
le circuit de commande (23, 123) étant conçu pour mesurer, par l'intermédiaire de l'enroulement auxiliaire côté primaire (L2u) sur le convertisseur (17), une tension côté secondaire au niveau du convertisseur (17).

3. Appareil d'éclairage de secours selon l'une des revendications 1 ou 2,
l'enroulement auxiliaire côté primaire (L2u) sur le convertisseur (17) permettant de déterminer, grâce au circuit de commande (23, 123), le moment où une bobine côté primaire (L20) du convertisseur (17) est démagnétisée.

4. Appareil d'éclairage de secours selon la revendication 3,
le circuit de commande (23, 123) étant conçu pour déclencher, lors de la détection de la démagnétisation de la bobine côté primaire (L20) du convertisseur (17), une remise en marche du commutateur cadencé (M1).

5. Luminaire avec un appareil d'éclairage de secours selon l'une des revendications 1 à 4,
le luminaire étant conçu pour passer en mode d'éclairage de secours lors d'une variation de la tension du réseau (13).

6. Procédé de contrôle d'un moyen d'éclairage avec un appareil d'éclairage de secours selon l'une des revendications 1 à 4, comprenant les étapes suivantes :
- alimentation, au moyen de l'accumulateur d'énergie (18), du convertisseur (17) cadencé et à potentiel séparé,
- mesure directe ou indirecte de la tension du réseau (13) au moyen de l'unité de commande (23, 123),
- lorsqu'une chute de la tension du réseau (13) est détectée au moyen de l'unité de commande (23, 123), fonctionnement cadencé du convertisseur (17) grâce au contrôle, au moyen du circuit de commande (23, 123), du commutateur (M1) du convertisseur (17),
**caractérisé par**
- l'alimentation du circuit de commande (23, 123) en énergie par l'intermédiaire de l'enroulement auxiliaire côté secondaire sur l'élément de séparation de potentiel (19a) ou par l'intermédiaire de l'enroulement auxiliaire côté primaire (L2u) sur le convertisseur (17),
- l'alimentation, grâce à l'enroulement auxiliaire côté secondaire sur le premier élément de séparation de potentiel (19a), du circuit de commande (23, 123) en énergie jusqu'à ce que le convertisseur (17) soit contrôlé de manière cadencée par le circuit de commande (23, 123),
- l'alimentation, grâce à l'enroulement auxiliaire côté primaire (L2u) sur le convertisseur (17), du circuit de commande (23, 123) en énergie lorsque le convertisseur (17) est contrôlé de manière cadencée par le circuit de commande (23, 123).
